# EUROPEAN PATENT APPLICATION

(11) **EP 1 727 010 A2**
(43) Date of publication of application: **29.11.2006**
(21) Application number: 05292180.6
(22) Date of filing: 17.10.2005
(51) Int. Cl.: G05D 1/02

(54) **Cleaning robot having body sensor**

(30) Priority: 07.03.2005 KR 2005018488
(71) Applicant: Samsung Gwangju Electronics Co., Ltd., Gwangju-city (KR)
(72) Inventor: Song, Jeong-gon, Gwangsan-gu Gwangju-city (KR); Hwang, Yun-sup, Gwangsan-gu Gwangju-city (KR); Jeung, Sam-jong, Gwangsan-gu Gwangju-city (KR); Jung, IL-du, Gwangsan-gu Gwangju-city (KR); Lee, Ju-sang, Sanweol-dong Gwangsan-gu Gwangju-city (KR); Ko, Jang-youn, Woonnam-dong Gwangsan-gu Gwangju-city (KR); Lim, Kwang-soo, Gencheon-gu Seoul (KR); Kim, Ki-man, Woonnam-dong Gwangsan-gu Gwangju-city (KR)
(74) Representative: Blot, Philippe Robert Emile

(57) **Abstract**

In exemplary embodiments, a robot cleaner with improved safety features comprises a driving part for movably supporting a cleaner body and supplying a driving force for operating the cleaner body; a suction part mounted on the cleaner body to draw in dust from a surface being cleaned; a body sensor mounted on the cleaner body to perceive any approach or contact of at least a part of human body or pet; and a control part for turning on and off the driving part according to a signal detected by the body sensor.

## Description

### CROSS-REFERENCE TO RELATED APPLICATIONS

This application claims benefit under 35 U.S.C. § 119(a) of Korean Patent Application No. 2005-18488, filed March 7, 2005, the entire contents of which are incorporated herein by reference.

### BACKGROUND OF THE INVENTION

### Field of the invention

The present invention relates generally to the field of automated cleaning devices, and in some exemplary embodiments, to a body sensor for such devices.

### Description of the Related Art

Among general household affairs, a cleaning work is usually performed by a vacuum cleaner. However, even with the vacuum cleaner, the cleaning work is very laborious because a user has to carry the vacuum cleaner to every nook and corner.

Accordingly, research has been conducted in the field of robot cleaners capable of automatically determining and performing desired operations with minimal external guidance. In general, a robot cleaner automatically travels along a predetermined area for cleaning and draws in dust from a surface being cleaned such as a floor without being continuously controlled by a user, thereby cleaning the predetermined area.

However, a person or pet (hereinbelow, referred to as 'body') in the cleaning area may collide with the robot cleaner as it automatically moves along, and may be injured by the collision. To prevent such collisions, attempts have been made to incorporate obstacle sensors in robot cleaners.

Nevertheless, obstacle sensors typically perceive only obstacles in front, that is, in the movement path of the robot cleaner. Therefore, although a part of body, such as a limb, may approach or contact the bottom of the robot cleaner as it faces the surface being cleaned, obstacle sensors often do not perceive the body. Since the robot cleaner comprises dangerous parts such as a driving motor for operating the robot cleaner and wheels on the bottom portion, the body may be injured by contacting these and other parts. Accordingly, there is a need for a safety device that will prevent approach and contact of a body to dangerous areas of the robot cleaner. Such safety devices are particularly needed in homes with babies and infants.

### SUMMARY OF THE INVENTION

It is to be understood that both the following summary and the detailed description are exemplary and explanatory and are intended to provide further explanation of the invention as claimed. Neither the summary nor the description that follows is intended to define or limit the scope of the invention to the particular features mentioned in the summary or in the description.

In certain embodiments, the present invention may solve one or more of the above problems and/or disadvantages and may provide one or more of the advantages described herein.

In an exemplary embodiment, a robot cleaner has a safety device which suspends driving of dangerous parts upon approach or contact of a body thereto, thereby improving safety.

In an exemplary embodiment, a robot cleaner comprises a driving part for movably supporting a cleaner body and supplying a driving force for operating the cleaner body; a suction part mounted on the cleaner body to draw in dust from a surface being cleaned; a body sensor mounted on the cleaner body to perceive approach or contact of at least a part of human body or pet; and a control part for turning on and off the driving part according to a signal detected by the body sensor.

According to some embodiments of the present invention, the control part turns on and off the suction part according to a signal detected by the body sensor. As an example, the body sensor may comprise a capacitance touch sensor. In this embodiment, the capacitance touch sensor may comprise a sensing board for perceiving the approach or contact of the body; and a signal processor for processing the signal detected by the sensing board and transmitting the signal to the control part. The sensing board may be disposed at a dangerous area which may injure the human body by contact. For example, the dangerous area may comprise the driving part.

In another more specific exemplary embodiment, the cleaner body comprises a bottom plate for facing the surface being cleaned, and a cover for shutting the bottom plate, the driving part comprises a driving motor mounted on the bottom plate, and a plurality of wheels connected with the driving part for power transmission and disposed on the bottom plate, and the sensing board is disposed on an inner side of the bottom plate, that faces the cover, and adjacent to the plurality of wheels and the driving motor and on an inner. The sensing board comprises a conductive material.

### BRIEF DESCRIPTION OF THE DRAWING FIGURES

The accompanying drawings, which are incorporated herein and form a part of the specification, illustrate the present invention and, together with the description, further serve to explain the principles of the invention and to enable a person skilled in the pertinent art to make and use the invention.

FIG 1 is an exploded, perspective view of a robot cleaner according to an exemplary embodiment;

FIG 2 is a block diagram used to explain an exemplary embodiment of a control system that can be used with the robot cleaner of FIG. 1;

FIG. 3 is a block diagram for explaining an exemplary embodiment of a body sensor that can be used with the embodiment of FIG. 2;

FIG 4 is a plane view schematically showing main elements of one embodiment of the robot cleaner of FIG 1; and

FIG 5 is a sectional view of FIG. 4 cut away along a line V-V.

### DETAILED DESCRIPTION OF THE EXEMPLARY EMBODIMENTS

A robot cleaner will now be disclosed in terms of several exemplary embodiments. This specification discloses one or more embodiments that incorporate the features of this invention. The embodiment(s) described, and references in the specification to "one embodiment", "an embodiment", "an example embodiment", etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, persons skilled in the art may effect such feature, structure, or characteristic in connection with other embodiments whether or not explicitly described.

In the following description, similar drawing reference numerals may be used for the same elements even in different drawings. The embodiments described, and their detailed construction and elements, are merely provided to assist in a comprehensive understanding of the invention. Thus, it is apparent that the present invention can be carried out in a variety of ways, and does not require any of the specific features described herein. Also, well-known functions or constructions are not described in detail since they would obscure the invention with unnecessary detail.

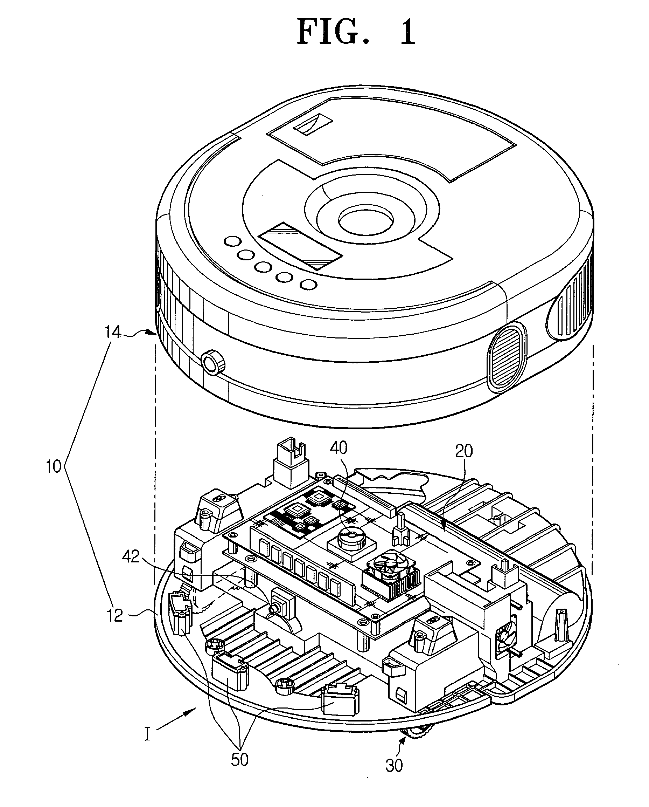

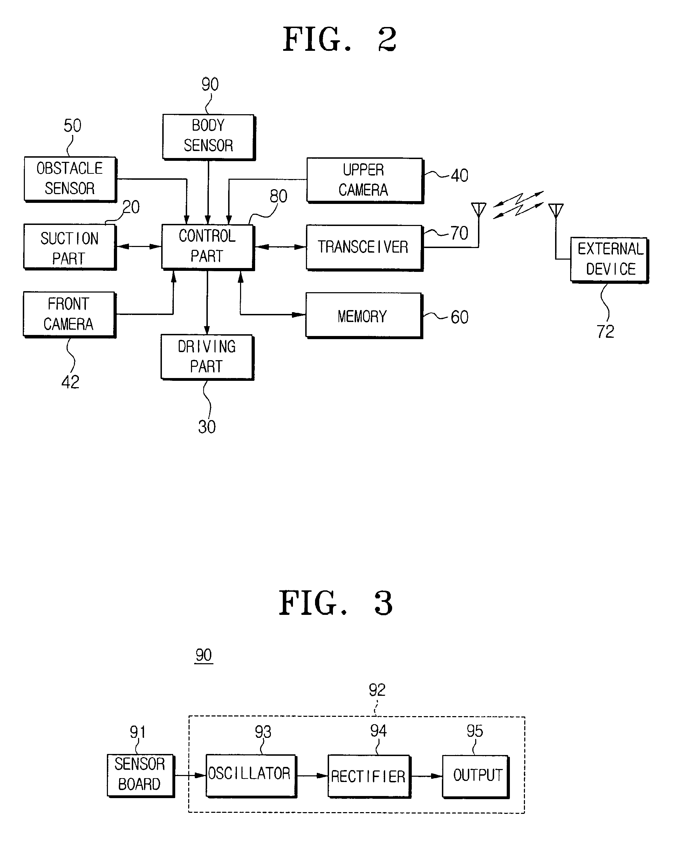

Referring to FIGS. 1 and 2, a robot cleaner according to one exemplary embodiment comprises a cleaner body 10, a suction part 20, a driving part 30, an upper camera 40, a front camera 42, an obstacle sensor 50, a memory 60, a transceiver part 70, a control part 80, and a body sensor 90. A reference sign 'I' denotes a front or movement direction of the robot cleaner.

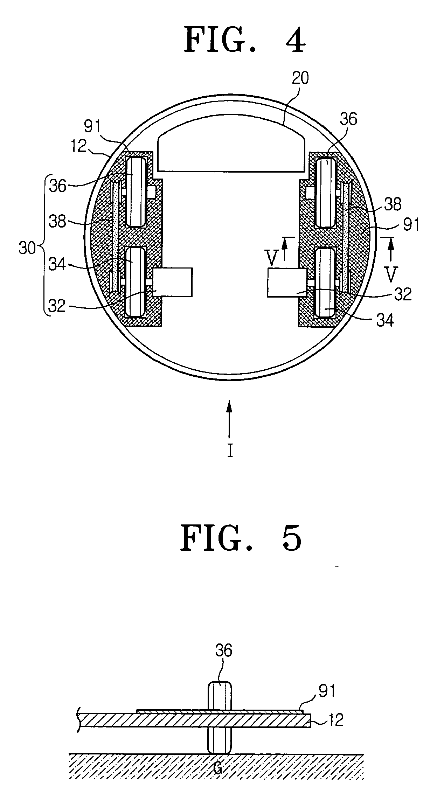

In this example, the cleaner body 10 comprises a bottom plate 12 for facing a surface being cleaned G (FIG. 5) and a cover 14 for shutting the bottom plate 12.

In an embodiment, the suction part 20 is mounted in the cleaner body 10 to draw in dust-laden air. The suction part 20, a main part for the cleaning operation of the robot cleaner, can be implemented by various types of well-known suction parts of robot cleaners. An exemplary suction part 20 may comprise a suction motor (not shown), a suction opening (not shown) formed at the cleaner body 10 to draw in dust on the floor by a suction force generated by the suction motor, a brush (not shown) exposed through the suction opening to beat and scatter the dust, and a dust collecting chamber (not shown) for collecting therein the drawn-in dust.

In an embodiment, the driving part 30 (FIG. 4) comprises a driving motor 32, a driving wheel 34 and a driven wheel 36. A pair of the driving motors 32 are mounted to a front part of the bottom plate 12 at opposite sides and supplied with power from a power supply part (not shown). A pair of the driving wheels 34 are mounted to the bottom plate 12 in power connection with the driving motor 32. A pair of the driven wheels 36 are mounted to a rear part of the bottom plate 12 at opposite sides and connected to the driving wheels 34 through a power transmission member 38. Although a belt pulley is used for the power transmission member 38 in the embodiment shown, the power transmission member 38 may be implemented by a variety of transmitting means such as a timing belt. Also, in contrast to the embodiment shown which employs a pair of driving motors, any number of motors may be used such as a single driving motor. As described above, a variety of designs can be used for the driving part 30 as long as they can stably move the robot cleaner. In accordance with a controlling signal of the control part 80, the driving part 30 independently rotates the driving motors 32 clockwise and counterclockwise. A moving direction of the robot cleaner is determined by controlling rotational speed (measured in revolutions per minute or RPM) of the respective driving motors 32.

In an embodiment, the upper camera 40, mounted on the bottom plate 12, photographs a ceiling image and outputs the photographed image to the control part 80. Preferably, a fisheye lens (not shown) is provided for upper camera 40. The structure of the fisheye lens is disclosed (for example) in Korean Laid-Open Patent Nos. 1996-7005245, 1997-48669 and 1994-22112. Such lenses are commercially available and will not be described in great detail.

In an embodiment, the front camera 42 is mounted on the bottom plate 12 to photograph a front image and output the photographed image to the control part 80.

In an embodiment, obstacle sensors 50 are circumferentially disposed on an edge of the bottom plate 12 at certain intervals to transmit a signal to the outside and receive the signal as reflected. Obstacle sensor 50 may be implemented using a variety of technologies, such as using an optical sensor or a supersonic-wave sensor. In addition, the obstacle sensor 50 may be used for detecting a distance therefrom to an obstacle or a wall.

In an embodiment, the memory 60 stores the ceiling image photographed by the upper camera 50 and helps the control part 80 calculate position information and traveling information based on the stored image. Also, the memory 60 may store a reference value for comparison with a signal value output from the body sensor 90, and a program for comparing the signal value with the reference value.

In one exemplary embodiment, the transceiving part 70 sends data for transmission to an external device 72 through a transceiver (not shown) mounted in the control part 80 and transmits to the control part 80 a signal received from the external device 72 through the transceiver (not shown). The external device 72 may comprise, for example, a wireless communication router (not shown) and a remote controller (not shown), which are capable of input and output of data.

In an embodiment, the control part 80 processes the signal received through the transceiver part 70 and controls the respective parts according to the signal. In embodiments where the cleaner body 10 further comprises a key input device (not shown) including a plurality of keys for setting functions of the robot cleaner, the control part 80 processes a key signal input from the key input device.

The control part 80 locates and abstracts a position recognition mark attached to the ceiling of the cleaning area from the ceiling image photographed by the upper camera 50, and recognizes the position of the robot cleaner based on information on the position, thereby controlling the respective parts to perform their own functions using the position information.

In addition, the control part 80 controls on/off states of the driving part 30 and the suction part 20 in accordance with the signal output from the body sensor 90. Otherwise, only one of the driving part 30 and the suction part 20 may be controlled by the signal input by the body sensor 90.

Referring to FIGS. 3 to 5, the body sensor 90 may comprise a capacitance touch sensor 90 for perceiving approach or contact of body according to variation of permittivity. An example of a suitable capacitance touch sensor 90 is disclosed in Korean Utility Model Publication No. 362801. The capacitance touch sensor 90 comprises a sensing board 91 for perceiving the approach or contact of the body and a signal processor 92 for processing a signal detected by the sensing board 91 and transmitting the signal to the control part 80.

In some exemplary embodiments, the sensing board 91 is disposed on the inner side of the bottom plate 12, which faces the cover 14, and adjacent to the driving part 30. The sensing board 91 may be made of conductive material such as copper and aluminum. By disposing the sensing board 91 near the driving part 30, the approach or contact of the body to the driving part 30 can be perceived. Further, being mounted on the inner side of the bottom plate 12 to face the cover 14, that is, within the cleaner body 10, the sensing board 91 is not exposed to the outside. Therefore, signal errors due to exterior moisture can be prevented. Although the present embodiment introduces the driving part 30 as a dangerous area which can hurt the body, in case that the robot cleaner further includes electrically or mechanically dangerous parts besides the driving part 30, a sensing board 91 can be disposed near these other dangerous parts.

In an embodiment, the signal processor 92 comprises an oscillator 93 for generating a signal of another form from an electric current detected by the sensing board 91, a rectifier 94 for converting the signal generated from the oscillator 93 to a direct current, and an output 95 for outputting the direct current converted from the signal to the control part 80. Since the capacitance touch sensor 90 is well-known in the art, detailed description of the operation and the circuit thereof will be omitted.

The operation of a device with selected exemplary features will now be described in detail with reference to FIGS. 1 through 5.

In this operational example, the control part 80 controls the driving unit 30 to move along the area for cleaning according to a predetermined travel pattern, and stores in the memory 41 an image map of the ceiling based on the image photographed by the upper camera 40. Alternatively, upon receiving a wireless command from the key input device or from the outside, the control part 80 may draw up the image map before the cleaning work.

For example, after completing the image map, the control part 80 recognizes the position of the robot cleaner using the image map while performing the work. Upon wireless input of a work request signal from the key input device or from the outside, the control part 80 recognizes the current position of the robot cleaner by comparing the image map with current images inputted from the upper camera 40 and the front camera 42, and controls the driving unit 20 to move from the recognized position along a path to a desired destination.

As an example, while the robot cleaner moves along the path to the destination, the control part 80 calculates a traveling error using a traveling distance detected by an encoder and the current position which is perceived by comparing the photographed image with the stored image map. Then, the control part 80 controls the driving unit 30 to track the path to the destination by compensating with the calculated error.

In this example, a suction motor (not shown) is driven by power supplied from the power supply part (not shown) provided within the cleaner body 10. Accordingly, a suction force is generated and the robot cleaner draws in the dust from the surface being cleaned G (FIG. 5) by the suction force, thus performing the cleaning work. Since these cleaning processes are well understood, detailed description thereof will be omitted.

When the obstacle sensor 50 detects an obstacle in front during the cleaning work, the control part 80 suspends the driving part 30 or controls the robot cleaner to divert the course and avoid the obstacle. However, the obstacle sensor 50 cannot perceive the approach or contact of an obstacle such as the body to a lower portion of the bottom plate 12 of the robot cleaner. Consequently, a sensing board 91 is provided to the lower surface of the bottom plate 12, especially the dangerous parts adjacent to the driving part 30, and to a portion provided for the user to grab for carrying the robot cleaner.

As a part of the body approaches or contacts the bottom plate 12, especially the driving part 30 of the bottom plate 12, the sensing board 91 perceives this approach. A signal is transmitted to the control part 80, passing through the oscillator 93, the rectifier 94 and the output 95. Therefore, the control part 80 turns off the driving part 30 and the suction part 20 to prevent the body from being injured by the driving part 30. Also, since the suction part 20 is turned off as well as the driving part 30, unnecessary energy consumption by idle operation can be prevented.

Moreover, in this example, because the sensing board 91 of the body sensor 90 is mounted within the cleaner body 10, signal errors due to the moisture can be prevented, accordingly improving the performance of the body sensor 90 for detecting the approach or contact of the body.

While the invention has been shown and described with reference to certain embodiments thereof, it will be understood by those skilled in the art that various changes in form and details may be made therein without departing from the spirit and scope of the invention as defined by the appended claims.

## Claims

1. A robot cleaner comprising:
a driving part for movably supporting a cleaner body and supplying a driving force for operating the cleaner body;
a suction part mounted on the cleaner body to draw in dust from a surface being cleaned;
a body sensor mounted on the cleaner body to perceive any approach or contact of at least a part of human body or pet; and
a control part for turning on and off the driving part according to a signal detected by the body sensor.

2. The robot cleaner of claim 1, wherein the control part turns on and off the suction part according to a signal detected by the body sensor.

3. The robot cleaner of any of claims 1 and 2, wherein the body sensor comprises a capacitance touch sensor.

4. The robot cleaner of claim 3, wherein the capacitance touch sensor comprises:
a sensor for perceiving the approach or contact of the body; and
a signal processor for processing the signal detected by the sensing board and transmitting the signal to the control part.

5. The robot cleaner of claim 4, wherein the sensor is disposed at a dangerous area which may injure the human body by contact.

6. The robot cleaner of claim 5, wherein the dangerous area comprises the driving part.

7. The robot cleaner of any of claims 4 to 6, wherein the cleaner body comprises a bottom plate for facing the surface being cleaned, and a cover for covering the bottom plate,
the driving part comprises a driving motor mounted on the bottom plate, and a plurality of wheels connected with the driving motor for power transmission and disposed on the bottom plate, and
the sensor is disposed on an inner side of the bottom plate, that faces the cover, and adjacent to the plurality of wheels and the driving motor and on an inner.

8. The robot cleaner of claim 7, wherein the sensor comprises a conductive material.

9. A robot cleaner comprising:
a driving part for movably supporting a cleaner body and supplying a driving force for operating the cleaner body;
a suction part mounted on the cleaner body to draw in dust from a surface being cleaned;
a body sensor mounted on the cleaner body to perceive any approach or contact of at least a part of human body or pet; and
a control part for turning on and off the suction part according to a signal detected by the body sensor.
